# EUROPEAN PATENT SPECIFICATION

(11) **EP 0 926 411 B1**
(45) Date of publication and mention of the grant of the patent: **04.06.2003**
(21) Application number: 98124012.0
(22) Date of filing: 17.12.1998
(51) Int. Cl.: F16K 3/312

(54) **A sliding valve assembly**
Schieberventil
Robinet-vanne

(30) Priority: 23.12.1997 ZA 9711594
(43) Date of publication of application: 30.06.1999
(73) Proprietor: Z & J Technologies GmbH, 52355 Düren (DE)
(72) Inventor: Fantin, Orlando c/o Zimmermann & Jansen, P.O. Box 1335, Vanderbijlpark 1900 (AZ)
(74) Representative: Popp, Eugen, Dr.

(56) References cited:
- DE-A- 3 414 874
- FR-A- 1 128 556
- US-A- 2 316 933
- US-A- 2 570 545
- US-A- 2 664 918
- US-A- 2 800 926

## Description

THIS INVENTION relates to a valve assembly. More particularly, the invention relates to a sliding valve assembly of the type commonly referred to as a "google valve" or "line blind", according to the preamble of claim 1.

Correspondingly the present invention relates to a sliding valve assembly which includes:
a valve body comprising a first part and a second part, the first part and the second part being aligned with each other and defining a passage therethrough with a longitudinal axis which, in use, is in register with a pair of aligned, spaced conduits between which the valve body is mountable;
a carrier reciprocally supported between the first part and the second part of the valve body, the carrier carrying a closure member and a bridging member in spaced relationship and the carrier being reciprocally displaceable transversely to the longitudinal axis of the passage;
a connecting means displaceably connecting the first part and the second part of the valve body to enable the first part to be displaced relative to the second part in a direction along the longitudinal axis of the passage; and
an operating means associated with the connecting means, the operating means comprising more than one operating elements, the operating element including an engaging portion which engages a corresponding portion of the connecting means and an operating arm fast with the engaging portion for effecting displacement of the engaging portion to move the first part of the valve body towards or away from the second part, the operating arm and the engaging portion being formed integrally as a one-piece unit. Such a sliding valve assembly is known from the FR-A 1 128 558.

Starting from this prior art concept, the object of the present invention is to provide a design which allows a simple, but still fail-safe displacement of the first and second part of the valve body irrespective of the number of operating elements associated to the operating means.

This object is being solved with the features of the characterizing part of claim 1, which provide an interconnection of the operating arms of the operating elements so that all the operating arms can be displaced synchronously. The result of this mechanism is that only one drive associated to just one operating arm is sufficient for a fail-safe movement of the two parts of the valve body towards or away from each other in a direction along the longitudinal axis of the passage defined by the said two parts.

The number of connecting means with their associated operating elements may be dependent on the type of carrier of the assembly. Where a swivel-type carrier is employed, at least three connecting means with their associated operating elements may be provided. Conversely, where the assembly comprises a sliding-type carrier, at least two and, preferably, four connecting means with their associating operating elements may be provided.

Each connecting means may be in the form of a guide pin projecting from the first part of the valve body towards the second part. The guide pins may be at least partially threaded.

Then, the engaging portion of each operating element may define a bore which is at least partly threaded and in which an associated guide pin is receivable. Each operating element may be rotatably mounted on the second part of the valve body.

Thus, more particularly, the engaging portion of each operating element may be held rotatably captive in a housing mounted on the second part of the valve body. The housing may be a split housing.

Each engaging portion may be in the form of a nut-like arrangement with the operating arm projecting radially outwardly therefrom.

A guide means may be supported on each guide pin for guiding the carrier, when the carrier is a sliding-type carrier, as it is displaced reciprocally transversely to the longitudinal axis of the passage. Each guide means may be in the form of a guide roller rotatably mounted on its associated guide pin.

The assembly may include a centring means for centring the guide roller between the first part and the second part of the valve body. The centring means may comprise an urging means arranged on each side of the guide roller.

The invention is now described by way of example with reference to the accompanying diagrammatic drawings.

In the drawings,
Figure 1 shows a front view of a sliding valve assembly, in accordance with the invention;
Figure 2 shows a sectional side view of a part of the sliding valve assembly taken along lines ll-ll in Figure 1; and
Figure 3 shows a schematic sectional side view of the part of the sliding valve assembly illustrating a guide means of the assembly.

In the drawings, reference numeral 10 generally designates a sliding valve assembly, in accordance with the invention. The sliding valve assembly 10 comprises a valve body 12 having a first part 14 and a second part 16 mounted in spaced relationship to define a slot 18 in which a carrier 20 is reciprocally displaceable.

The sliding valve assembly 10 is used in pipelines and a first conduit of the pipeline is connected to an operatively outer surface of the first part 14 of the valve body 12 and a second conduit is connected to an operatively outer surface of the second part 16 of the valve body 12.

The parts 14 and 16 of the valve body 12 define a passage 22 therethrough having a longitudinal axis 24 which, in use, is aligned with longitudinal axes of the conduits connected to the parts 14 and 16 of the valve body 12.

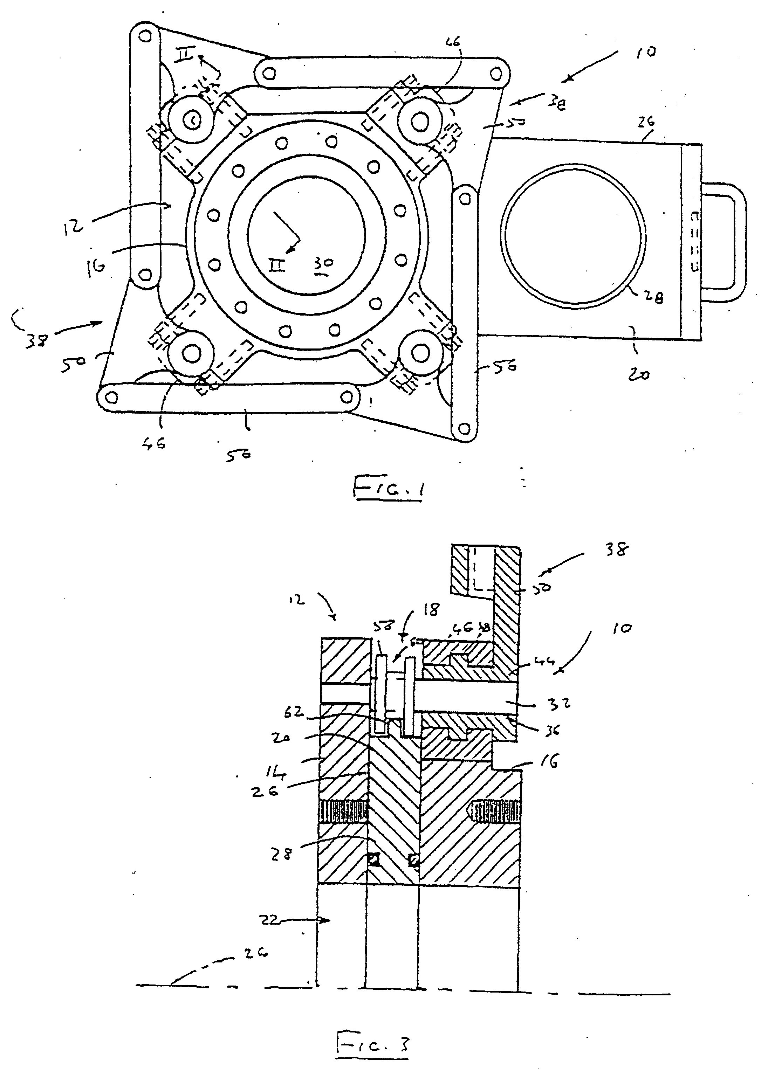

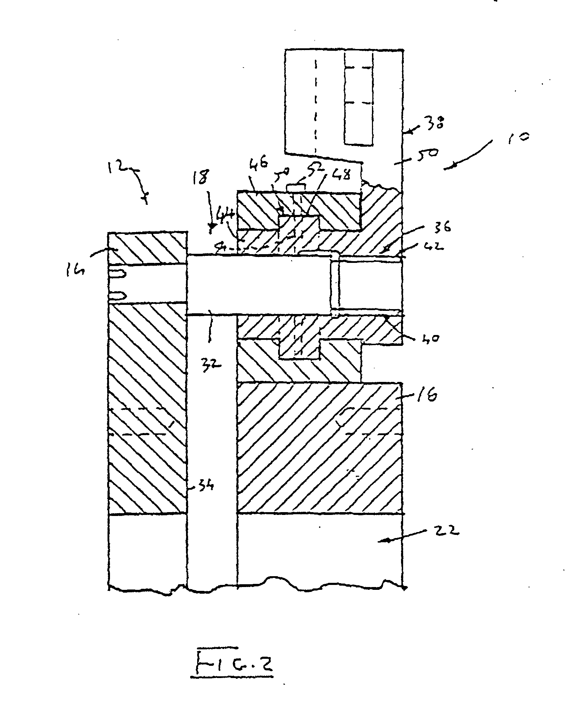

The sliding valve assembly 10 is of the type commonly referred to as a goggle valve or line blind and the carrier 20 comprises a goggle plate or blind 26 having a bridging member in the form of an annulus 28 and a closure member 30 arranged in side-by-side relationship on the plate 26. It is to be noted that the goggle plate 26 is omitted from Figure 2 for the sake of clarity.

The carrier 20 is reciprocally displaceable relative to the valve body 12 at right angles to the longitudinal axis 24.

For effecting sealing between the bridging member 28 or the closure member 30 of the carrier 20, as the case may be, it is necessary for the first part of the valve body 14 to be reciprocally displaceable with respect to the second part 16 of the valve body 12 in a direction along the longitudinal axis 24. For this purpose the first part 14 of the valve body 12 is connected to the second part 16 of the valve body 12 by a connecting means comprising a plurality of guide pins 32. For a sliding-type carrier 20, as illustrated, four such guide pins 32 are provided to project from an inner surface 34 of the first part 14 of the valve body 12 towards the second part 16 of the valve body 12 to be received in bores 36 defined in an operating means or operating element 38 of the valve assembly 10. An operating element 38 is associated with each guide pin 32 of the assembly 10.

A free end of each guide pin 32 is threaded, as illustrated at 40 in Figure 2 of the drawings, to engage a corresponding screw threaded part 42 of the bore 36 defined by a nut-like portion 44 of the associated operating element 38.

The nut-like portion 44 is held rotatably captive in a split housing 46 mounted on the second part 16 of the valve body 12. The nut-like portion 44 has a boss formation 48 which is received in a corresponding recessed region 50 of the housing 46.

An operating arm 50 is formed integrally with the nut-like portion 44 as a one-piece unit. Each operation element 38 is of a low-friction material such as a spheroidal-graphite cast iron which is suitably lubricated. To effect lubrication, a grease nipple 52 is mounted on the housing 46. A lubrication channel 54 is defined through the housing 46 and the nut-like portion 44 also to effect lubrication of the threaded parts 40 and 42 of the guide pin 32 and bore 36 respectively.

As illustrated in Figure 1 of the drawings, the sliding valve assembly 10 comprises four operating elements 38, the operating elements 38 being interconnected via links 56. Thus, rotational displacement of one of the operating elements 38, for example, by means of an operating handle (not shown) causes similar rotational displacement of the remaining operating elements 38.

As a development of the invention, and as illustrated in Figure 3 of the drawings, a guide means in the form of a guide roller 58 is mounted rotatably on each guide pin 32, the guide rollers 58 each defining a channel or groove 60 therein in which a rib 62 of the carrier 20 is receivable. A centring means in the form of a spring (not shown) is mounted on each side of the roller 58 for centring the roller 58 in the space 18 between the first part 14 and the second part 16 of the valve body 12.

In use, to enable the valve assembly 10 to be opened or closed i.e. having the bridging member 28 or the closure member 30 in the passage 22, respectively, the first part 14 of the valve body 12 is moved away from the second part 16 by appropriate rotational displacement of the operating elements 38. The carrier is then reciprocally displaced to bring the other of the closure member 30 or bridging member 28 into the passage 22, as the case may be. The first part 14 of the valve body 12 is displaced towards the second part 16, once again, by appropriate rotational displacement of the operating elements 38.

It is particular advantage of the invention that each operating element 38 is of a one-piece construction and/or comprises a single-handed thread. Thus, the cost of manufacture of the sliding valve assembly 10 is considerably reduced in comparison with sliding valve assemblies which have heretofore been available.

## Claims

1. A sliding valve assembly comprising:
a valve body comprising a first part (14) and a second part (16), the first part and the second part being aligned with each other and defining a passage (22) therethrough,
a carrier (20) reciprocally supported between the first part (14) and the second part (16) of the valve body, the carrier carrying a closure member (30) and a bridging. member (28) in spaced relationship and the carrier (20) being reciprocally displaceable transversely to the longitudinal axis of the passage (22),
a connecting means (32) displaceably connecting the first part (14) and the second part (16) of the valve body to enable the first part to be displaced relative to the second part in a direction along the longitudinal axis of the passage (22); and
an operating means associated with the connecting means (32), the operating means comprising more than one operating elements (38), the operating elements each including an engaging portion (44) which engages a corresponding portion of the connecting means (32) and an operating arm (50) fast with the engaging portion (44) for effecting displacement of the engaging portion to move the first part (14) of the valve body towards or away from the second part (16), the operating arm (50) and the engaging portion (44) being formed integrally as a one-piece unit;
**characterized in that**
the operating arms (50) of the operating elements (38) are interconnected by links (56) so that rotational displacement of one of the arms (50) causes rotational displacement of the remaining arms (50) to effect displacement of the first part (14) of the valve body towards or away from the second part (16) of the valve body.

2. The sliding valve assembly of Claim 1, wherein the engaging portion (44) of the operating means and the corresponding portion of the connecting means (32) have complementary, mating single-handed threads (40, 42), such that displacement of the engaging portion (44) moves the first part (14) of the valve body towards or away from the second part (16).

3. The sliding valve assembly of Claim 1 or 2, further comprising a guide means (58) supported between the first and the second part (14, 16) of the valve body for guiding the carrier (20) as it is reciprocally displaced and a centering means (60) associated with the guide means (58) for centering the carrier (20) between the first part and the second part of the valve body.

4. The sliding valve assembly of Claims 1, 2 or 3, wherein one or more connecting means are provided, each connecting means comprising a guide pin (32) projecting from the first part (14) of the valve body towards the second part (16), the guide pins (32) being at least partially threaded.

5. The sliding valve assembly of Claim 4, wherein the engaging portion (44) of each operating element (38) defines a bore (36) which is at least partly threaded and which receives an associated guide pin (32), the associated operating element (38) being rotatably mounted on the second part (16) of the valve body.

6. The sliding valve assembly of any of the Claims 1 to 5, wherein each engaging portion comprises a nut-like arrangement (44) with the operating arm (50) projecting radially outwardly therefrom.

## Patentansprüche

1. Schieberbaugruppe, umfassend :
einen Schieberkörper mit einem ersten Teil (14) und einem zweiten Teil (16), wobei das erste Teil und das zweite Teil miteinander ausgerichtet sind und einen Durchgang (22) zwischen sich bilden,
eine Halterung (20), die zwischen dem ersten Teil (14) und dem zweiten Teil (16) des Schieberkörpers hin- und hergehend gehaltert ist, wobei die Halterung ein Verschlusselement (30) und ein Überbrückungselement (28) voneinander beabstandet trägt, und die Halterung (20) quer zur Längsachse des Durchgangs (22) hin und her verschiebbar ist,
eine Verbindungseinrichtung (32), die das erste Teil (14) und das zweite Teil (16) des Schieberkörpers verschiebbar verbindet, um zu ermöglichen, dass sich das erste Teil bezüglich des zweiten Teils in einer Richtung entlang der Längsachse des Durchgangs (22) verschieben kann; und
eine der Verbindungseinrichtung (32) zugeordnete Betätigungseinrichtung, wobei die Betätigungseinrichtung mehr als ein Betätigungselement (38) umfasst, wobei die Betätigungselemente jeweils einen Angriffsabschnitt (44) umfassen, der an einem entsprechenden Abschnitt der Verbindungseinrichtung (32) angreift, und einen mit dem Angriffsabschnitt (44) fest verbundenen Betätigungsarm (50), um eine Verschiebung des Angriffsabschnitts zur Bewegung des ersten Teils (14) des Schieberkörpers zum zweiten Teil (16) hin oder davon weg zu bewerkstelligen, wobei der Betätigungsarm (50) und der Angriffsabschnitt (44) integral als einstückige Einheit gebildet sind;
**dadurch gekennzeichnet, dass**
die Betätigungsarme (50) der Betätigungselemente (38) durch Verbindungsglieder (56) so miteinander verbunden sind, dass eine Drehverschiebung eines der Arme (50) eine Drehverschiebung der übrigen Arme (50) bewirkt, um eine Verschiebung des ersten Teils (14) des Schieberkörpers zum zweiten Teil (16) des Schieberkörpers hin oder davon weg zu bewerkstelligen.

2. Schieberbaugruppe nach Anspruch 1, bei der der Angriffsabschnitt (44) der Betätigungseinrichtungen und der entsprechende Abschnitt der Verbindungseinrichtung (32) komplementäre, zueinander passende, mit einer Hand zu bedienende Gewinde (40, 42) aufweisen, so dass eine Verschiebung des Angriffsabschnitts (44) das erste Teil (14) des Schieberkörpers zum zweiten Teil (16) hin oder davon weg bewegt.

3. Schieberbaugruppe nach Anspruch 1 oder 2, darüber hinaus eine Führungseinrichtung (58) umfassend, die zwischen dem ersten und dem zweiten Teil (14, 16) des Schieberkörpers gehaltert ist, um die Halterung (20), wenn sie sich hin und her verschiebt, zu führen, und eine Zentriereinrichtung (60), die der Führungseinrichtung (58) zugeordnet ist, um die Halterung (20) zwischen dem ersten Teil und dem zweiten Teil des Schieberkörpers zu zentrieren.

4. Schieberbaugruppe nach Anspruch 1, 2 oder 3, bei der eine oder mehrere Verbindungseinrichtungen vorgesehen sind, wobei jede Verbindungseinrichtung einen Führungsstift (32) umfasst, der vom ersten Teil (14) des Schieberkörpers zum zweiten Teil (16) hin vorspringt, wobei die Führungsstifte (32) zumindest teilweise mit Gewinde versehen sind.

5. Schieberbaugruppe nach Anspruch 4, bei der der Angriffsabschnitt (44) jedes Betätigungselements (38) eine Bohrung (36) bildet, die zumindest teilweise mit Gewinde versehen ist, und die einen zugeordneten Führungsstift (32) aufnimmt, wobei das zugeordnete Betätigungselement (38) am zweiten Teil (16) des Schieberkörpers drehbeweglich angebracht ist.

6. Schieberbaugruppe nach einem der Ansprüche 1 bis 5, bei dem jeder Angriffsabschnitt eine mutterartige Anordnung (44) umfasst, wobei der Betätigungsarm (50) davon radial nach außen vorspringt.

## Revendications

1. Vanne coulissante comprenant
un corps de vanne comprenant une première pièce (14) et une deuxième pièce (16), la première pièce et la deuxième pièce étant alignées l'une par rapport à l'autre et définissant un passage (22) les traversant,
un porteur (20) supporté mutuellement entre la première pièce (14) et la deuxième pièce (16) du corps de vanne, le porteur portant un élément de fermeture (30) et un élément de pontage (28) en relation espacée et le porteur (20) étant mobile selon un mouvement alternatif transversalement à l'axe longitudinal du passage (22),
un moyen de raccordement (32) raccordant de manière mobile la première pièce (14) et la deuxième pièce (16) du corps de vanne de façon à autoriser le déplacement de la première pièce par rapport à la deuxième pièce selon une direction longeant l'axe longitudinal du passage (22) ; et
un moyen de fonctionnement associé au moyen de raccordement (32), le moyen de fonctionnement comprenant plus d'un élément de fonctionnement (38), les éléments de fonctionnement comprenant chacun une partie engageante (44) qui engage fermement une partie correspondante du moyen de raccordement (32) et un bras de fonctionnement (50) avec la partie engageante (44) pour que le déplacement de la partie engageante rapproche ou écarte de la deuxième pièce (16) la première pièce (14) du corps de vanne, le bras de fonctionnement (50) et la partie engageante (44) étant monoblocs en tant qu'unité formée d'une pièce ;
**caractérisée en ce que**
le bras de fonctionnement (50) des éléments de fonctionnement (38) sont interconnectés par des liens (56) de façon à ce que le déplacement en rotation de l'un des bras (50) cause le déplacement en rotation des bras restants (50) pour rapprocher ou écarter de la deuxième pièce (16) la première pièce (14) du corps de vanne.

2. L'assemblage de vanne coulissante de la revendication 1, dans lequel la partie engageante (44) du moyen de fonctionnement et la partie correspondante du moyen de raccordement (32) possèdent des filetages (40, 42) manipulables d'une main, appairés, complémentaires, pour que le déplacement de la partie engageante (44) rapproche ou écarte de la deuxième pièce (16) la première pièce (14) du corps de vanne.

3. L'assemblage de vanne coulissante de la revendication 1 ou 2, comprenant en outre un moyen de guidage (58) supporté entre la première et la deuxième pièce (14, 16) du corps de vanne pour guider le porteur (20) alors qu'il est déplacé selon un mouvement alternatif et un moyen de centrage (60) associé avec le moyen de guidage (58) pour centrer le porteur (20) entre la première et la deuxième pièce du corps de vanne.

4. L'assemblage de vanne coulissante de la revendication 1, 2 ou 3, dans lequel un ou plusieurs moyens de raccordement sont prévus, chacun desdits moyens de raccordement comprenant une cheville , de guidage (32) se projetant de la première partie (14) du corps de vanne en direction de la deuxième partie (16), les chevilles de guidage (32) étant au moins partiellement filetées.

5. L'assemblage de vanne coulissante de la revendication 4, dans lequel la partie engageante (44) de chaque élément de fonctionnement (38) définit un perçage (36) qui est au moins partiellement fileté et qui reçoit une cheville de guidage (32) associée, l'élément de fonctionnement (38) associé étant monté de manière rotative sur la deuxième partie (16) du corps de vanne.

6. L'assemblage de vanne coulissante de l'une quelconque des revendications 1 à 5, dans lequel chaque partie engageante comprend un arrangement (44) ressemblant à un écrou dont le bras de fonctionnement (50) s'écarte radialement.
